# EUROPEAN PATENT APPLICATION

(11) **EP 1 361 757 A1**
(43) Date of publication of application: **12.11.2003**
(21) Application number: 02291138.2
(22) Date of filing: 06.05.2002
(51) Int. Cl.: H04N 7/24, H04N 7/26

(54) **Image content region reconfiguration, data messages and methods therefor**

(71) Applicant: MOTOROLA, INC., Schaumburg, IL 60196 (US)
(72) Inventor: Abdesselem, Ouelid, 31000 Toulouse (FR); Cendon-Martin, Bruno, 31100 Toulouse (FR); Garani, Pradeep, 31000 Toulouse (FR)
(74) Representative: Litchfield, Laura Marie

(57) **Abstract**

A data message including a region definition and in some embodiments a region shape attribute specifying a region shape corresponding to at least one region defined in the data message. In some embodiments, the data message includes a link type attribute, and a link origin attribute specifying a link origin. The link type attribute specifies a link shape extending from the link origin to a corresponding region. The data message enables displaying of first image information within a first region (610) and second image information within a second region (620), wherein the second region may relate to the first region with a link shape (630).

## Description

### FIELD OF THE INVENTIONS

The present inventions relate generally to displaying image content, for example multimedia content, and more particularly to configuring regions, for example region shape, where image content is displayed on display devices, the inventions also relate to data messages with image content and image content reconfiguration information and methods therefor.

### BACKGROUND OF THE INVENTIONS

Multi-media message transmissions, for example multi-media messaging services (MMS), have grown substantially and will continue to grow in both wireless and hardwire sectors of the telecommunications industry.

The Synchronized Multimedia Integration Language (SMIL) specification is presently desired for implementing multimedia message transmissions, particularly postcard format transmissions. The SMIL specification is an extensible mark-up language (XML) based programming language that allows authors to create interactive modular multi-media presentations. For example, SMIL allows authors to describe temporal behavior of a multi-media presentation, associate hyperlinks with media objects, and describe the layout of the presentation with one or more regions on a display. The SMIL specification modularization groups semantically related SMIL elements, attributes, and attribute values into a disjoint set of SMIL modules, which can be recombined to produce multiple SMIL profiles.

Known existing standards for implementing multimedia message transmissions, including the SMIL specification, do not permit inserting images and text in non-rectangular regions. Multi-media messaging services (MMS) implemented in the Synchronized Multimedia Integration Language (SMIL) specification, for example, must render or display image content in rectangular regions.

The various aspects, features and advantages of the present invention will become more fully apparent to those having ordinary skill in the art upon careful consideration of the following Detailed Description of the Invention with the accompanying drawings described below.

### BRIEF DESCRIPTION OF THE DRAWINGS

FIG. 1 is an exemplary image data region specified in a data message.
FIG. 2 is a process flow diagram for rendering and displaying an image based upon a data message specification.
FIG. 3 is another exemplary image data region specified in a data message.
FIG. 4 is a process flow diagram for rendering and displaying a link shape based upon a data message.
FIG. 5 is an exemplary image displayed based upon a multi-media data message.
FIG. 6 is an exemplary image displayed based upon a multi-media data message.
FIG. 7 is an exemplary image displayed based upon a multi-media data message.

### DETAILED DESCRIPTION OF THE INVENTIONS

The present invention pertains to data messages comprising a region definition in which an image is displayed on a display device. In some embodiments the data message includes region shape information specifying a shape, for example a non-rectangular shape, for the region defined.

In one exemplary embodiment, the data message is a synchronized multimedia integration language (SMIL) message. Alternatively, the data message is a Extensible Hypertext Mark-up Language (XHTML), or some other extensible markup language (XML) based language, although in other embodiments the data message may be in some other language, for example a proprietary language or an open industry standard language.

In the present specification, including the detailed description and claims thereof, the term "image" includes within its meaning any displayable element, including but not limited to still images, animated images, video images, background images, region and layout definitions, borders, etc.

In some embodiments, the data messages are formulated for over-the-air transmission, for example over W-CDMA or GSM or E/GPRS and other wireless communication networks where efficient use of bandwidth is especially desirable. More generally, though, the data messages are transmitted over any wireless or wire-line medium, including wide or local area networks.

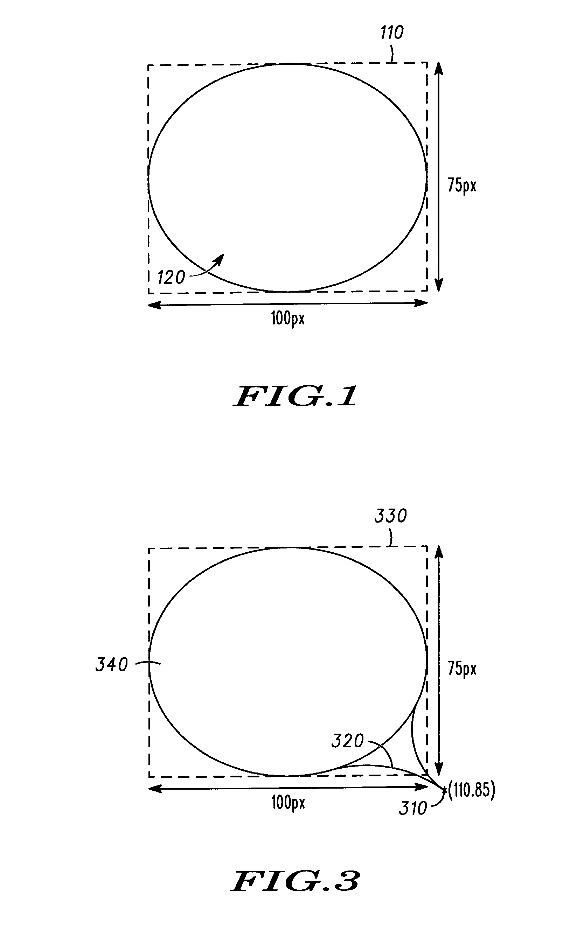

In one embodiment the data message includes a region shape attribute corresponding to at least one region defined in the data message. The region shape attribute specifies a shape for a corresponding region with which the region shape attribute is associated. FIG. 1 illustrates an exemplary region 110 and a corresponding shape 120 inside the region. The exemplary region 110 has a rectangular shape and its size or dimensions are specified in terms of pixels: Height = 75px; and Width = 100px.

In embodiments where the data message is a SMIL message, the region shape attribute is part of a region definition. An exemplary data message region definition with a shape attribute is as follows:
<region id="video1" width="100px" height="75px" shape="ellipse">
In the exemplary definition, "video1" identifies the name of the region of interest, and the width and height specify rectangular dimensions, in pixels, of the named region. In other embodiments, more generally, the region may be defined as having other than a rectangular shape. The shape attribute for the "video1" region is defined for example as an "ellipse", as illustrated in FIG. 1. Alternatively, an identifier other than the term "shape" may be used to define the shape attribute. Also, the shape attribute may have any desired shape, non-limiting examples of which are discussed further below.

In some embodiments, the absence of a shape attribute definition results in a default shape assigned to the region identified. For example, the default region shape may be the rectangular shape specified by the region rectangular dimensions, or alternatively some other default shape may be assigned to the region, for example an elliptical shape.

Exemplary region shapes include circles, ovals, stars, polygons, arrows, hearts, and other irregular shapes, etc. In some embodiments where there is a default shape, the default shape may take any form. In the absence of a region shape attribute, the region will preferably assume a default shape. The region shape attribute generally specifies a shape other than the default shape, for example a non-rectangular shape or some other shape, examples of which are discussed above.

In some embodiments, the region shape attribute is merely a reference to a predefined shape. In other embodiments, however, the region shape attribute is a graphics language specification of the region shape, for example a scalable vector graphics (SVG) language specification of the desired region shape. The graphics language specification of the region shape may be expressed alternatively in some other programming language, though preferably a vector graphics language.

The data message is generally transmitted, for example over a wireless or wire-line network, to, or otherwise received by an electronics device with the capability of displaying image data. The electronics device may be a computer, or a cellular handset, or some other mobile wireless communications device with image rendering and display capabilities. The exemplary SMIL message is typically transmitted to cellular communications handsets, for example multimedia service (MMS) subscribers, although it may be acquired by any means.

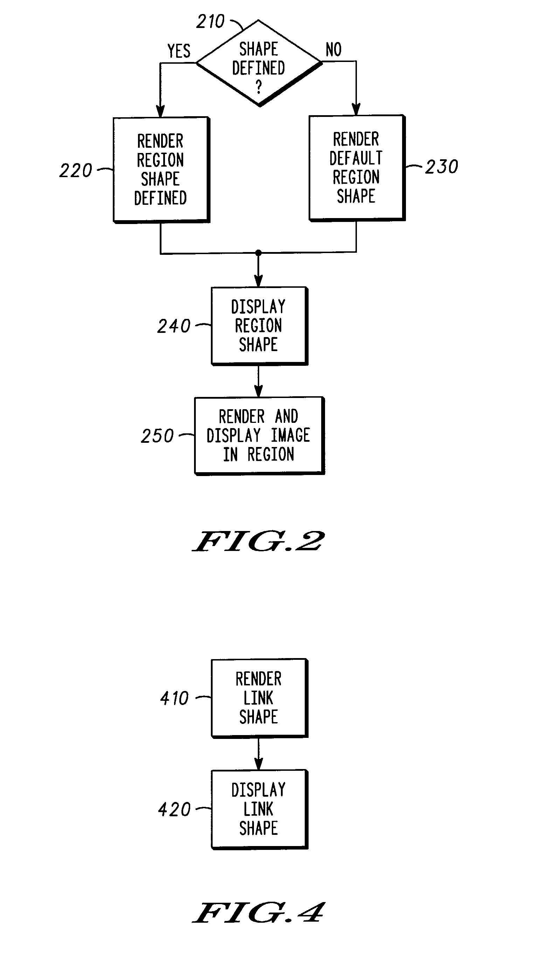

In one application, in FIG. 2, at block 210, a determination is made whether a shape is defined for a corresponding region. If a shape has been defined, for example by a shape attribute, the shape is rendered at block 220 for the corresponding region. If a shape has not been defined, a default shape is rendered at block 230. At block 240, the shape rendered is displayed. Although the block diagram of FIG. 2 depicts the rending and displaying of the shape discretely, in practice these processes may be performed integrally, or in a single operation or continuous operation, the processing details of which are known generally by those having ordinary skill in the art.

In other embodiments, the data message includes a link type attribute and a link origin attribute. In one embodiment, the link origin attribute specifies a link origin, and the link type attribute specifies a link shape. The specified link shape extends from the link origin to a corresponding region, or region shape.

In FIG. 3, a link origin attribute identifies an origin 310 identified by display coordinates (110, 85). A link shape attribute identifies a link shape 320 extending from the origin 310 toward the corresponding region 330 with a corresponding ellipse shape 340.

In FIG. 3, the link shape 320 extending from the origin 310 and the region shape 330 are integrated and thus constitute a new shape when rendered and displayed in combination with the ellipse shape 340. The exemplary new shape formed by constituent region shapes 320 and 340 in FIG. 3 is a quasi-balloon shape, although more generally the combined region shape and link shape may assume any form.

In one application, in FIG. 4, the link shape is rendered at block 410 and displayed at block 420 based on the link type attribute and the link origin attribute specified in the data message. As noted above, the rendering and displaying of the link shape may be performed as a single operation. The rendering and displaying of the link shape may be performed before, during or after the rendering and displaying of the region shape. Thus in some embodiments, the rendering and displaying of the region and link shapes may be an integral or continuous operation.

In embodiments where the data message is a SMIL message, the link origin attribute may be defined as part of the existing SMIL "regPoint" element as follows:
<regPoint id="mouth" top="85px" left="110px"> ...
In the exemplary regPoint element, "id" is defined as "mouth" at the location (85px, 110px), which is expressed in pixels. The link origin attribute is then associated with a region defined in a region element, for example,
<region id="video1" width="100px" height="75px" shape="ellipse" linkOrigin="mouth" linkType="specify link shape here" >
The region element thus specifies the linkOrigin as the "mouth", which is defined in the regPoint element above. The region element also specifies a shape for the linkType, examples of which are given below. The link shape may be predefined or alternatively it may be specified by a graphical language, for example the SVG language as discussed above.

In FIG. 2, in some embodiments an image, for example text and/or a photo, is rendered and displayed, at block 250, in the region or within a corresponding region shape. The rendering and display of the image may be performed as an integral operation. The rendering and display of the image may also be performed integrally with the rendering and displaying of the region shape and/or the link shape, if any.

In some embodiments, text is displayed within the shape of the region, for example, the text may be displayed along an internal boarder of the shape, which may have generally a non-linear path. Alternatively, the text may be displayed more conventionally within a rectangular area within the shape.

In some embodiments, images having an area larger than an area of the region or region shape are cropped, or clipped, to fit within the region or region shape, for example within the ellipse shape.

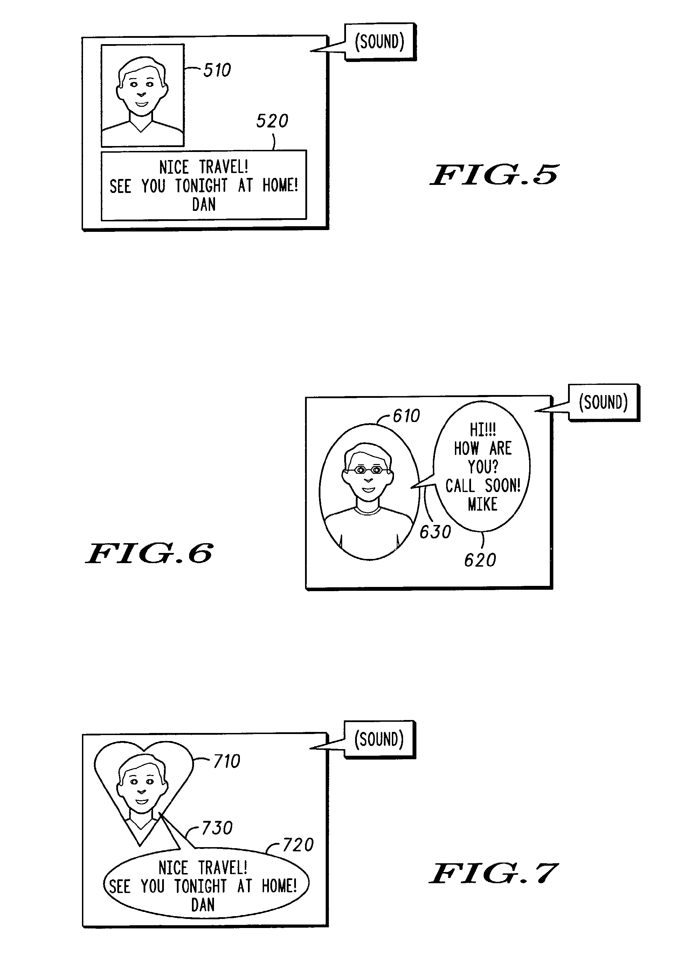

FIG. 5 illustrates a first embodiment of a displayed image based upon a corresponding data message wherein the image includes a first rectangular region shape 510 having a photo image, and a second rectangular region shape 520 having text disposed therein. In some multi-media applications, the corresponding data message from which the image is generated has audio data associated with the image or text thereof. The audio data emanates as sound, as indicated in FIG. 5, which may correspond to the text.

FIG. 6 illustrates another exemplary embodiment of a displayed image based upon a data message, wherein the image includes a first elliptical region shape 610 having a photo image, which may be cropped to fit within the region shape 610. FIG. 6 also illustrates a second elliptical region shape 620 having text disposed therein, and a corresponding link shape 630, which indicates that the text and sound emanate from the mouth of the image photo.

FIG. 7 is similar to FIG. 6, except that the first region shape 710 has a heart shape. The second region shape 720 has an elliptical shape and a link shape 730 indicating that the text and sound emanate from the mouth of the image photo. In other alternative embodiments, the links in FIGs. 5-7 may have some other shape, for example a stacked cloud-like shape to indicate that the displayed text is thought rather than speech.

For a display screen having 120x90 pixels, the SMIL code for the illustration of FIG. 7 is as follows:

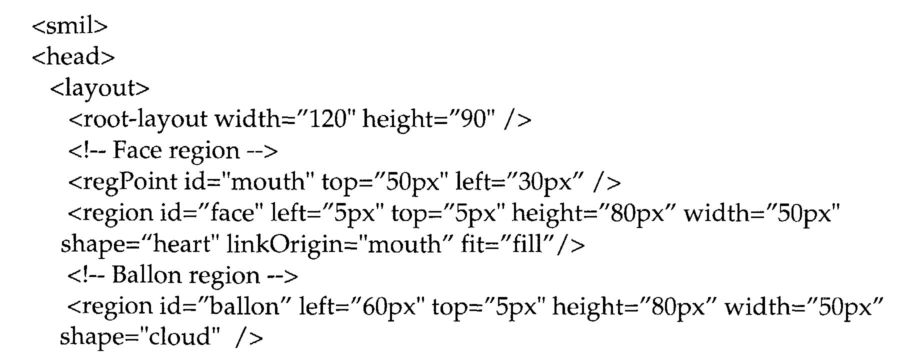

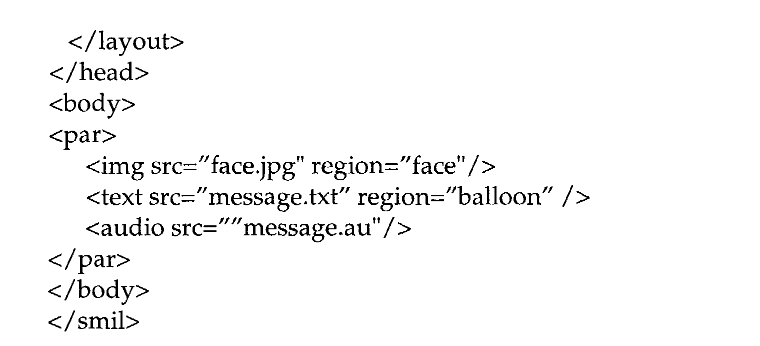

While the present inventions and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope and spirit of the inventions, which are to be limited not by the exemplary embodiments but by the appended claims.

## Claims

**1.** A data message comprising a region definition, **characterizing**:
a region shape attribute corresponding to at least one region defined in the data message,
the region shape attribute specifying a shape of the corresponding region.

**2.** The data message of Claim 1, the region shape attribute specifying a non-rectangular shape of the corresponding region.

**3.** The data message of Claim 1, the region shape attribute is a reference to a predefined shape.

**4.** The data message of Claim 1,
a link type attribute,
a link origin attribute, the link origin attribute specifying a link origin,
the link type attribute specifying a link shape extending from the link origin to a corresponding region.

**5.** The data message of Claim 1, the data message is a synchronized multimedia integration language message, the region shape attribute is part of the region definition.

**7.** The data message of Claim 1, the region shape attribute is a graphics language specification of the region shape.

**8.** The data message of Claim 7, the graphics language specification is a scalable vector graphics language specification of the region shape.

**9.** The data message of Claim 1, an attribute specifying a default shape for the region of the data message.

**10.** A data message method **characterizing**:
rendering a shape in a region,
the shape of the region specified by a region shape attribute corresponding to the region;
displaying the shape rendered as specified by the region shape attribute.

**11.** The data message method of Claim 10, rendering the shape by rendering a non-rectangular shape specified by the region shape attribute.

**12.** The data message method of Claim 10, specifying the shape by referencing a predefined shape.

**13.** The data message method of Claim 10, displaying the link shape between a link origin and the displayed shape.

**14.** The data message method of Claim 13, forming a new shape by combining the link shape and the region shape.

**15.** The data message of Claim 13, rendering the link shape specified by a link type attribute, specifying the link origin with a link origin attribute.

**16.** The data message method of Claim 10, displaying text within the shape of the region.

**17.** The data message method of Claim 16, displaying the text along a boarder of the shape.

**18.** The data message method of Claim 16, displaying the text within a rectangular area within the shape.

**19.** The data message method of Claim 11, rendering an image having an area greater than the shape, clipping portions of the image outside the shape, displaying the rendered image within the shape.

**20.** A method of generating a data message as claimed in any preceding claim, comprising producing said region shape attribute specifying a shape of said corresponding region.

**21.** Apparatus for generating a data message as claimed in any of claims 1 to 19, comprising means for producing said region shape attribute specifying a shape of said corresponding region.
